# EUROPÄISCHE PATENTANMELDUNG

(11) **EP 1 672 348 A1**
(43) Veröffentlichungstag der Anmeldung: **21.06.2006**
(21) Anmeldenummer: 04106573.1
(22) Anmeldetag: 14.12.2004
(51) Int. Cl.: G01M 17/00

(54) **Verfahren zum Betreiben eines Kraftfahrzeuges auf einem Rollenprüfstand**

(71) Anmelder: Ford Global Technologies, LLC, A subsidary of Ford Motor Company, Dearborn, MI 48126 (US)
(72) Erfinder: Will, Frank, Geelong, Victoria 3220 (AU); Hoeren, Alexander, 42279, Wuppertal (DE)
(74) Vertreter: Drömer, Hans-Carsten

(57) **Zusammenfassung**

Die Erfindung betrifft ein Verfahren zum Betreiben eines Kraftfahrzeuges auf einem Rollenprüfstand, wobei das Kraftfahrzeug mit einer Motorsteuerung (2) ausgestattet ist, mit der eine elektronisch geregelte Frischluft- bzw. Frischgemischbeimessung (3) und ein Automatikgetriebe oder ein elektronisch betätigbares Getriebe (4) steuerbar ist.

Es soll ein Verfahren der oben genannten Art aufgezeigt werden, das auf dem Rollenprüfstand die Generierung reproduzierbarer Messergebnisse unter vergleichsweise geringem Kostenaufwand gestattet.

Erreicht wird dies durch ein Verfahren der oben genannten Art, das dadurch gekennzeichnet ist, daß eine externe Steuereinheit (6) an die Motorsteuerung (2) angeschlossen wird und mittels der externen Steuereinheit (6) sowohl auf die Steuerung der Frischluft- bzw. Frischgemischbeimessung (3) als auch auf die Steuerung des Getriebes (4) d. h. auf den momentanen Getriebegang Einfluß genommen wird, um mit dem Kraftfahrzeug vorgegebene Fahrzyklen mit definierten Schaltpunkten auf dem Rollenprüfstand abzufahren.

## Beschreibung

Die Erfindung betrifft ein Verfahren zum Betreiben eines Kraftfahrzeuges auf einem Rollenprüfstand, wobei das Kraftfahrzeug mit einer Motorsteuerung ausgestattet ist, mit der eine elektronisch geregelte Frischluft- bzw. Frischgemischbeimessung und ein Automatikgetriebe oder ein elektronisch betätigbares Getriebe steuerbar ist.

Rollenprüfstände, die auch als Chassisdynamometer bezeichnet werden, sind ein wichtiges Hilfsmittel bei der Entwicklung von Kraftfahrzeugen. Sie dienen primär der Ermittlung des Kraftstoffverbrauchs und der Schadstoffemissionen eines Kraftfahrzeuges, können aber darüber hinaus auch zur Überprüfung einzelner Aggregate während des Kraftfahrzeugbetriebes herangezogen werden. Damit bilden sie eine Ergänzung zu den Motorenprüfständen, auf denen häufig nur der isolierte Verbrennungsmotor separat, insbesondere ohne die später im Fahrzeug eingesetzten Abgasnachbehandlungssysteme, getestet d.h. betrieben wird.

Um verschiedene Fahrzeuge hinsichtlich ihrer Emissionen bzw. hinsichtlich ihres Kraftstoffverbrauchs vergleichen zu können und um Modifikationen an einem Fahrzeug beurteilen zu können, müssen die Fahrbedingungen einheitlich sein und definiert werden. Aus diesem Grund sind auch die von der Gesetzgebung vorgegebenen Emissionsgrenzwerte immer in Zusammenhang mit dem jeweiligen vorgeschriebenen Testprozedere bzw. Fahrzyklus zu sehen. Dabei muß das Fahrzeug eine vorgegebene - simulierte - Strecke zurücklegen, wobei die Geschwindigkeit in Abhängigkeit von der Wegstrecke und damit folglich auch die momentane Beschleunigung bzw. Verzögerung sowie - bei Handschaltgetrieben - der zu fahrende Gang vorgeschrieben sind.

Der in Europa maßgebliche Testzyklus wird als "Neuer Europäischer Fahrzyklus" bezeichnet und mit NEFZ abgekürzt. Dieser Zyklus weist eine Länge von 11.007 Meter und eine Zyklusdauer von 1220 Sekunden auf, wobei die Probeentnahme seit dem Jahr 2000 direkt ab Motorstart erfolgt, wohingegen früher die Probeentnahme vierzig Sekunden nach dem Zyklusanfang begann. Aufgrund dieser Umstellung fokussierten sich die Entwicklungsarbeiten anfangs zunehmend auf die Emissionen von unverbrannten Kohlenwasserstoffen, die unmittelbar nach dem Motorstart während der Warmlaufphase vergleichsweise hoch sind.

Der neue europäische Fahrzyklus setzt sich aus zwei Abschnitten zusammen, wobei der erste Abschnitt, der auch als ECE bezeichnet wird, die Stadtfahrt und der zweite Abschnitt, der als EUDC (Extra Urban Driving Cycle) bezeichnet wird, die Außerorts- bzw. Überlandfahrt repräsentieren bzw. simulieren soll. Der entsprechende Testzyklus zur Messung der Abgasemissionen in den Vereinigten Staaten ist der FTP 75 (Federal Test Procedure).

Zur Bestimmung der Abgasemissionen werden die Abgase während des gesamten Testzyklus in einem Plastikbeutel nach der CVS-Methode (Continuous-Volume-Sample) gesammelt. Anschließend findet eine Analyse auf unverbrannte Kohlenwasserstoffe (HC), Kohlenmonoxid (CO), Kohlendioxid (CO₂), Stickoxide (NOₓ) und Sauerstoff statt.

Der Kraftstoffverbrauch kann zum einen gemessen werden, indem der der Brennkraftmaschine zugeführte Kraftstoff erfaßt wird. Zum anderen läßt sich der Kraftstoffverbrauch aber auch ausgehend von den gemessenen Abgasemissionen aus einer Kohlenstoff-Bilanz berechnen, wenn die Zusammensetzung des Kraftstoffes bekannt ist bzw. vor Testbeginn durch eine Analyse ermittelt wird. Die zuletzt genannte Ermittlung des Kraftstoffverbrauchs ist gesetzlich vorgeschrieben. Der Kraftstoffverbrauch wird in Liter pro einhundert Kilometer (1/100km) und die Emissionen in Gramm pro Kilometer (g/km) angegeben.

Zur Absolvierung des Fahrzyklus bedient ein Fahrer das Gaspedal und das Bremspedal, sowie bei Handschaltgetrieben das Kupplungspedal und den Schalthebel, entsprechend der jeweiligen Vorgaben. Wie bereits weiter oben erwähnt sind einheitliche Fahrzyklen entwickelt und vorgeschrieben worden, um verschiedene Fahrzeuge vergleichen, Modifikationen an einem Fahrzeug beurteilen und die Einhaltung der gesetzlich vorgeschrieben Schadstoffgrenzwerte unter einheitlichen Randbedingungen überprüfen zu können. Aus denselben Gründen ist es erforderlich, daß der Fahrer dem vorgegebenen Fahrzyklus möglichst exakt folgt, insbesondere die vorgeschriebene Geschwindigkeit einhält. Hierfür ist eine Toleranzbreite von ±2 Stundenkilometer vorgeschrieben. Nur auf diese Weise ist eine hohe Reproduzierbarkeit und die Eignung der gemessenen Emissionen zu Vergleichszwecken gewährleistet.

Um die Qualität der auf dem Rollenprüfstand ermittelten Meßwerte weiter zu verbessern und sich unabhängig von dem persönlichen Fahrstil des jeweiligen Testfahrers zu machen, der auch bei vorgeschriebenen Fahrzyklen nicht ganz ohne Einfluß auf die Messergebnisse ist, werden nach dem Stand der Technik zunehmend Roboter zum Betreiben des Kraftfahrzeuges auf dem Rollenprüfstand eingesetzt. Ein derartiger Roboter ersetzt den Fahrer und trägt damit auch zur Einsparung von Personal und Personalkosten bei.

Einen Roboter zum Betreiben eines Kraftfahrzeuges auf einem Rollenprüfstand beschreibt beispielsweise die deutsche Patentschrift DE 42 40 756 C2. Der in dieser Patentschrift offenbarte Roboter verfügt über einen Roboterkörper, der von einem Steuergerät gesteuert bzw. betätigt wird, wobei der Roboter zum Betätigen verschiedener Bedienungseinrichtungen des Kraftfahrzeuges, insbesondere der Pedale, mit mehreren Stellgliedern ausgestattet ist.

Nachteilig an der Verwendung eines Roboters der oben genannten Art zur Durchführung von Tests auf dem Rollenprüfstand ist, daß der Roboter vor jedem Test zunächst im Fahrzeug positioniert und installiert und nach dem Test entfernt werden muß. Zudem handelt es sich um ein zusätzliches technisches Gerät, das wie jedes andere Gerät vor Testbeginn einer Kalibrierung unterzogen werden muß. Diese Maßnahmen sind zeit- und daher kostenintensiv.

Darüber hinaus ist ein derartiger Roboter in der Anschaffung ein sehr kostenintensives Hilfsmittel, das zudem fortlaufend eine entsprechend Wartung und Instandhaltung erfordert.

Vor diesem Hintergrund ist es die Aufgabe der vorliegenden Erfindung für ein Kraftfahrzeug, das mit einer Motorsteuerung, einer elektronisch geregelten Frischluft- bzw. Frischgemischbeimessung und einem Automatikgetriebe oder alternativ einem elektronisch betätigbaren Getriebe ausgestattet ist, ein Verfahren zum Betreiben dieses Kraftfahrzeuges auf einem Rollenprüfstand aufzuzeigen, mit dem die nach dem Stand der Technik bekannten Nachteile überwunden werden und das insbesondere die Generierung reproduzierbarer Messergebnisse unter vergleichsweise geringem Kostenaufwand gestattet.

Gelöst wird diese Aufgabe durch ein Verfahren gemäß dem Oberbegriff des Anspruchs 1, das dadurch gekennzeichnet ist, daß
■ eine externe Steuereinheit an die Motorsteuerung angeschlossen wird und mittels der externen Steuereinheit sowohl auf die Steuerung der Frischluft- bzw. Frischgemischbeimessung als auch auf die Steuerung des Getriebes d.h. auf den momentanen Getriebegang Einfluß genommen wird, um mit dem Kraftfahrzeug vorgebbare Fahrzyklen mit definierten Schaltpunkten auf dem Rollenprüfstand abzufahren.

Bei dem erfindungsgemäßen Verfahren wird auf einen Roboter, wie er beispielsweise in der DE 42 40 756 offenbart ist, verzichtet. Statt dessen wird eine externe Steuereinheit verwendet, die mit der Motorsteuerung des Kraftfahrzeuges verbunden wird und mit der auf den Betrieb des Kraftfahrzeuges Einfluß genommen werden kann.

Dabei dient die eigentliche Motorsteuerung des Kraftfahrzeugs der externen Steuereinheit als Schnittstelle zur Brennkraftmaschine. Mittels der externen Steuereinheit kann die Motorsteuerung in einfacher Weise manipuliert bzw. vollständig ersetzt werden. Die externe Steuereinheit kann dabei die von der Motorsteuerung erfaßten Betriebsparameter auslesen bzw. nutzen, insbesondere zur Generierung von Steuersignalen.

Die externe Steuereinheit kann mit Programmen wie INCA von der Firma ETAS oder ATI betrieben werden. Im Rahmen der Entwicklung von Brennkraftmaschinen dienen diese Programme nach dem Stand der Technik bereits auf Motorenprüfständen zur Programmierung bzw. Manipulation der Motorsteuerung und zum Auslesen von Betriebsparametern der Brennkraftmaschine, welche von der Motorsteuerung erfaßt werden.

Das erfindungsgemäße Verfahren zum Betreiben eines Kraftfahrzeuges auf einem Rollenprüfstand setzt eine elektronisch geregelte Frischluft- bzw. Frischgemischbeimessung voraus, die mittels einer im Kraftfahrzeug vorgesehenen Motorsteuerung betätigt d. h. gesteuert wird. Dementsprechend können Fahrzeuge, die beispielsweise über eine im Ansaugtrakt angeordnete mechanisch betätigbare Drossel zur Frischluftbeimessung verfügen, nicht mit dem vorgeschlagenen Verfahren auf einem Rollensprüfstand betrieben werden, weil prinzipbedingt auf eine derartige Frischluftbeimessung nicht mittels einer an die Motorsteuerung angeschlossenen externen Steuereinheit Einfluß genommen werden kann. Stellglieder zur Betätigung des Gaspedals d. h. zur Einstellung und Veränderung der Last, wie sie beispielsweise ein Roboter aufweist, sind nicht vorgesehen.

Eine weitere Vorraussetzung für die Anwendung des erfindungsgemäßen Verfahrens ist die Ausstattung des Kraftfahrzeuges mit einem Automatikgetriebe oder einem elektronisch betätigbaren Getriebe, da das erfindungsgemäße Betreiben des Kraftfahrzeuges mittels externer Steuereinheit auf der Übermittlung elektronischer Signale an die Motorsteuerung basiert, weshalb das Verfahren auf die genannten Getriebearten beschränkt werden muß. Weder ein Schalthebel noch eine mechanische Kupplung bzw. ein Kupplungspedal können mittels externer Steuereinheit manipuliert bzw. bedient werden, im Gegensatz zu dem in der DE 42 40 756 C2 offenbarten Roboter, der für diese Aufgaben mit speziellen Stellgliedern ausgestattet ist.

Durch die Verwendung einer externen Steuereinheit zu dem Zweck, ein Kraftfahrzeug auf einem Rollenprüfstand zu betreiben, entfällt der üblicherweise eingesetzte Roboter, der vor einem Test im Fahrzeug installiert und nach Durchführung des Tests wieder entfernt werden muß. Mit dem Roboter entfallen auch die Wartungs- und Instandhaltungsmaßnahmen, so daß nicht nur die Anschaffungskosten für den Roboter an sich, sondern auch die zusätzlichen Kosten für die Applikation und die Instandhaltung dieses Systems entfallen.

Mit Hilfe der externen Steuereinheit können auf einem Rollenprüfstand Fahrzyklen simuliert werden, die ein bestimmtes Geschwindigkeitsprofil und die Wahl eines bestimmten Getriebeganges vorgeben, wobei eine Beschränkung auf Fahrzyklen gegeben ist, bei denen die Verzögerungen mittels Motorbremse durch Reduzierung der Last realisiert werden können.

Fahrzyklen, bei denen größere Verzögerungen vorgeschrieben sind und die daher den Einsatz einer aktiven Bremsvorrichtung erfordern, verlangen nach komplexeren Verfahren, die noch im Rahmen der bevorzugten Ausführungsformen gemäß den Unteransprüchen näher erörtert werden. Aber auch die mittels des vorgeschlagenen Verfahrens durchführbaren Fahrzyklen geben Aufschluß über die Güte bzw. Qualität von am Fahrzeug vorgenommenen Modifikationen und eigenen sich infolge ihrer guten Reproduzierbarkeit zu Vergleichszwecken.

Durch das erfindungsgemäße Verfahren zum Betreiben eines Kraftfahrzeuges auf einem Rollenprüfstand wird somit die der Erfindung zugrunde liegende Aufgabe gelöst, nämlich ein Verfahren aufzuzeigen, mit dem die nach dem Stand der Technik bekannten Nachteile überwunden werden und das insbesondere die Generierung reproduzierbarer Messergebnisse unter vergleichsweise geringem Kostenaufwand gestattet.

Weitere vorteilhafte Varianten des Verfahrens werden im Zusammenhang mit den Unteransprüchen erörtert.

Vorteilhaft sind Ausführungsformen des Verfahrens, bei denen
■ das Kraftfahrzeug mit einer elektronisch betätigbaren Bremsvorrichtung ausgestattet wird, die mittels der Motorsteuerung gesteuert wird, und
■ mittels der externen Steuereinheit auf die Steuerung der elektronisch betätigbaren Bremsvorrichtung Einfluß genommen wird.

Diese Verfahrensvariante gestattet die Durchführung von Fahrzyklen, die Verzögerungen vorschreiben, welche nicht mehr allein mittels einer Motorbremse d. h. durch ein die Brennkraftmaschine bzw. das Fahrzeug verzögerndes Schleppmoment realisiert werden können.

Daher können mit dem vorgeschlagenen Verfahren auch die vom Gesetzgeber zur Bestimmung der Schadstoffemissionen und des Kraftstoffverbrauchs eines Fahrzeuges vorgeschriebenen Fahrzyklen, insbesondere der neue europäische Fahrzyklus NEFZ und der FTP 75, absolviert werden.

Vorteilhaft sind Ausführungsformen des Verfahrens, bei denen
■ zur elektronisch geregelten Frischluft- bzw. Frischgemischbeimessung eine elektronisch steuerbare Drosselklappe verwendet wird.

Nach dem Stand der Technik wird der überwiegende Teil der neu zugelassenen Kraftfahrzeuge, bei denen die Laststeuerung mittels Drosselklappe erfolgt, bereits mit einer elektronisch steuerbaren Drosselklappe ausgestattet. Bei bestimmten Brennverfahren ist dies sogar eine zwingende Vorraussetzung für das Betreiben der Brennkraftmaschine, beispielsweise bei einem Schichtladeverfahren mit Direkteinspritzung. Die Steuerung der elektronisch steuerbaren Drosselklappe übernimmt die Motorsteuerung des Fahrzeuges, der sämtliche hierzu notwendigen Daten bzw. Betriebsparameter zur Verfügung stehen, so daß mittels der angeschlossenen externen Steuereinheit wiederum Einfluß auf die Stellung der Drosselklappe und damit auf die Laststeuerung genommen werden kann.

Vorteilhaft sind auch Ausführungsformen des Verfahrens, bei denen
■ zur elektronisch geregelten Frischluft- bzw. Frischgemischbeimessung elektronisch steuerbare Ladungswechselorgane verwendet werden.

Vorteilhaft sind dabei insbesondere Ausführungsformen des Verfahrens, bei denen
■ als elektronisch steuerbare Ladungswechselorgane zumindest teilweise variable Ventile verwendet werden.

Aufgrund der begrenzten Ressourcen an fossilen Energieträgern, insbesondere aufgrund der begrenzten Vorkommen an Mineralöl, ist man bei der Entwicklung von Verbrennungsmotoren ständig bemüht, den Kraftstoffverbrauch zu minimieren.

Problematisch ist der Kraftstoffverbrauch insbesondere bei Ottomotoren. Der Grund hierfür liegt im prinzipiellen Arbeitsverfahren des Ottomotors, bei dem die Einstellung der gewünschten Leistung durch Veränderung der Füllung des Brennraumes erfolgt, so daß dem Arbeitsverfahren des Ottomotors - anders als beim Dieselmotor - eine Quantitätsregelung zugrunde liegt. Die Laststeuerung erfolgt bei herkömmlichen Brennkraftmaschinen mittels einer im Ansaugtrakt vorgesehenen Drosselklappe, was thermodynamische Nachteile hat.

Ein Lösungsansatz zur Entdrosselung des ottomotorischen Arbeitsverfahrens besteht in der Verwendung eines zumindest teilweise variablen Ventiltriebs, bei dem die Steuerzeiten und/oder der Ventilhub der Ventile mehr oder weniger stark variiert werden können. Dabei werden die Ventile häufig mechanisch, elektromagnetisch, hydraulisch oder pneumatisch betätigt und mittels der Motorsteuerung gesteuert.

Werden bei einer Brennkraftmaschine zur elektronisch geregelten Frischluft- bzw. Frischgemischbeimessung elektronisch steuerbare Ladungswechselorgane, insbesondere variable Ventile, verwendet, kann mittels der an die Motorsteuerung angeschlossenen externen Steuereinheit die Laststeuerung beeinflußt und manipuliert werden und damit die Last eingestellt werden.

Vorteilhaft sind auch Ausführungsformen des Verfahrens, bei denen
■ die externe Steuereinheit mit einer Steuereinheit eines herkömmlichen Roboters zum Betreiben eines Kraftfahrzeuges auf einem Rollenprüfstand verbunden wird, und
■ die zum Betreiben des Kraftfahrzeuges erforderlichen Daten bzw. Informationen von der Steuereinheit des Roboters an die externe Steuereinheit weitergeleitet werden.

Die gemäß dem erfindungsgemäßen Verfahren vorzusehende externe Steuereinheit dient bei dieser Verfahrensvariante als Schnittstelle zwischen Roboter und Motorsteuerung. Als Roboter kann ein Roboter, wie er in der DE 42 40 756 C2 beschrieben ist, zum Einsatz kommen. Der Roboter, der über die zur Durchführung des Fahrzyklus erforderlichen Daten, üblicherweise in Form des jeweiligen Geschwindigkeitsprofils d.h. der Geschwindigkeit v über der zurückgelegten Wegstrecke s, verfügt, übermittelt die Steuersignale bzw. Daten an die externe Steuereinheit, die von dieser in die Motorsteuerung des Fahrzeuges eingespeist werden.

Vorteilhaft ist diese Verfahrensvariante trotz der Verwendung eines Roboters, weil diese Verfahrensvariante eine Programmierung der externen Steuereinheit nicht erfordert bzw. überflüssig macht und auf die bereits in den Roboter eingegebenen Daten zurückgreift. Eine Installation des Roboters im Fahrzeug zur Durchführung des Tests ist auch bei dieser Vorgehensweise nicht notwendig, so daß die oben genannten Vorteile des erfindungsgemäßen Verfahren im wesentlichen zum Tragen kommen.

Vorteilhaft sind auch Ausführungsformen des Verfahrens, bei denen
■ eine externe Steuereinheit verwendet wird, die sowohl von der Motorsteuerung erfaßte Daten aufzeichnen kann als auch die Motorsteuerung beeinflussen bzw. manipulieren kann,
■ zur Programmierung der externen Steuereinheit ein vorgebbarer Fahrzyklus auf dem Rollenprüfstand absolviert wird, und
■ während der Absolvierung dieses Fahrzyklus von der Motorsteuerung erfaßte Daten von der externen Steuereinheit aufgezeichnet werden.

Im Gegensatz zu der zuvor beschriebenen Verfahrensvariante muß die externe Steuereinheit nicht auf einen Roboter und die im Roboter abgelegten Daten zurückgreifen. Vielmehr erfolgt die Programmierung der externen Steuereinheit, indem ein Fahrzyklus absolviert wird, beispielsweise von einem Fahrer, der das Fahrzeug gemäß einem vorgebbaren Fahrzyklus betreibt, und dabei die von der Motorsteuerung erfaßten Daten an die externe Steuereinheit übermittelt und abgespeichert werden. Die gespeicherten Daten dienen anschleißend der externen Steuereinheit, um das Fahrzeug während folgender Tests auf dem Rollenprüfstand via bzw. mittels der Motorsteuerung zu steuern.

Vorteilhaft sind in diesem Zusammenhang Ausführungsformen des Verfahrens, bei denen
■ zur Programmierung der externen Steuereinheit ein oder mehrere der folgenden Betriebsparameter von der externen Steuereinheit aufgezeichnet werden: Fahrzeuggeschwindigkeit, Drehzahl, Getriebegang, Last, Bremskraft bzw. -leistung, Öltemperatur, Kühlmitteltemperatur, Luftverhältnis, Frischluftbeimessung pro Arbeitspiel.

Vorteilhaft sind Ausführungsformen des Verfahrens, bei denen
■ die externe Steuereinheit unter Verwendung der aufgezeichneten Daten Einfluß auf die Motorsteuerung nimmt.

Dabei werden die Steuersignale, die die externe Steuereinheit an die Motorsteuerung übermittelt, aus den zuvor aufgezeichneten Daten abgeleitet.

Vorteilhaft sind dabei Ausführungsformen des Verfahrens, bei denen
■ die aufgezeichneten Daten zur Erzeugung von Kennfeldern verwendet werden bzw. die aufgezeichneten Daten in Form von Kennfeldern gespeichert werden.

Die Speicherung der Kennfelder kann dabei in Form von Tabellen erfolgen.

Vorteilhaft sind auch Ausführungsformen des Verfahrens, bei denen
■ die aufgezeichneten Daten dazu verwendet werden, ein neuronales Netz zu trainieren.

Mittels neuronaler Netze kann eine Brennkraftmaschine bzw. ein Fahrzeugmodell mit nur geringem Zeitaufwand abgebildet werden. Ist ein Netz bzw. Modell ausreichend trainiert worden, so läßt sich mit diesem neuronalen Netz schneller und kostengünstiger eine Kennfeldoptimierung durchführen als an der realen Brennkraftmaschine bzw. am realen Fahrzeug.

Damit ein qualitativ hochwertiges Netz generiert wird, muß das Netz mit einer ausreichenden Menge an Eingangsgrößen und unterschiedlichen Last und Geschwindigkeitsbereichen, beispielsweise auf einem Rollenprüfstand, trainiert werden. Daher eignet sich ein neuronales Netz zur Anwendung bei dem erfindungsgemäßen Verfahren.

Vorteilhaft sind auch Ausführungsformen des Verfahrens, bei denen
■ die externe Steuereinheit mit der Steuerung des Rollenprüfstandes verbunden wird.
   Diese Verfahrensvariante gestattet eine Einflußnahme mittels der Steuerung bzw. Regelung des Rollenprüfstandes auf den zu absolvierenden Fahrzyklus bzw. auf den Betrieb des Kraftfahrzeuges auf dem Rollenprüfstand. Auf diese Weise kann beispielsweise eine Rolle des Rollenprüfstandes, über welche üblicherweise der Antrieb des Fahrzeuges auf dem Rollenprüfstand realisiert wird, verzögert werden. Dadurch können Verzögerungen verwirklicht werden, welche sich nicht mehr allein mittels einer Motorbremse bzw. über den Rollwiderstand des Fahrzeuges realisiert werden können. Daher eignet sich diese Variante insbesondere für Fahrzeuge, die mit einem Automatikgetriebe ausgestattet sind oder bei denen infolge des Fehlens einer elektronisch betätigbaren Bremsvorrichtung nicht gezielt vorgegebene Verzögerungen mittels der externen Steuereinheit eingeleitet werden können.

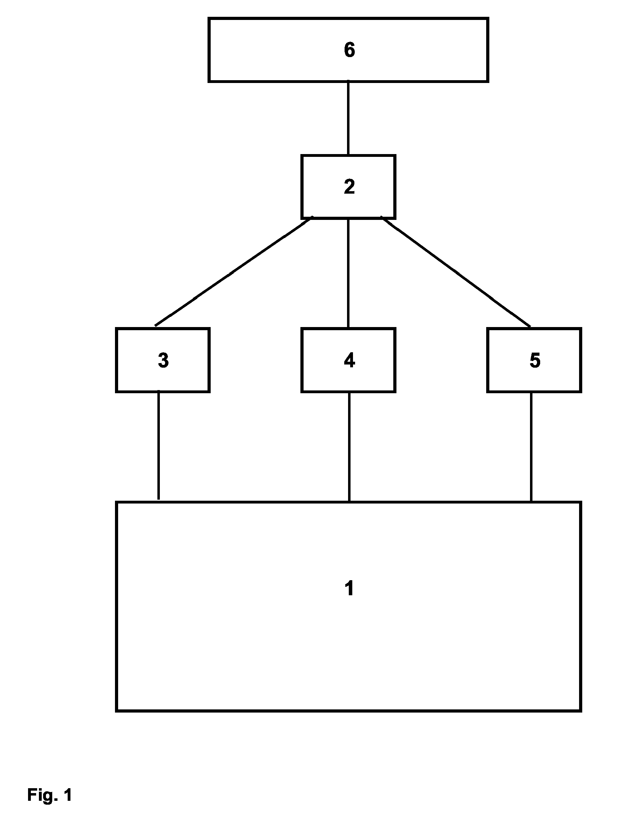

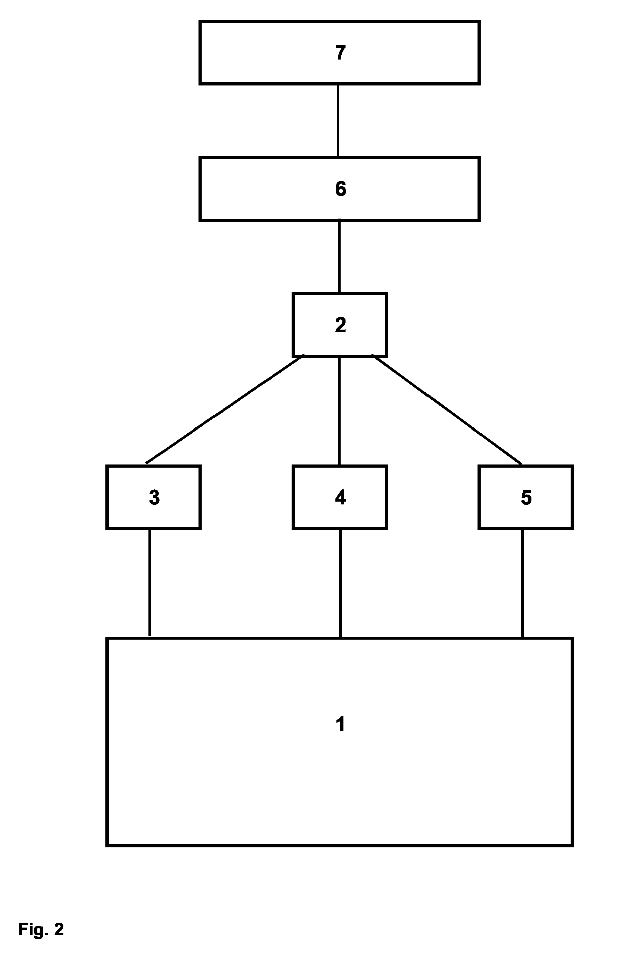

Im folgenden wird die Erfindung anhand von zwei Ausführungsbeispielen gemäß den Figuren 1 und 2 näher beschrieben. Hierbei zeigt:
- Fig.1 1: schematisch das Schaltbild einer mit einer externen Steuereinheit ausgestatteten Brennkraftmaschine nach einer ersten Ausführungsform, und
- Fig. 2: schematisch das Schaltbild einer mit einer externen Steuereinheit ausgestatteten Brennkraftmaschine nach einer zweiten Ausführungsform.

Figur 1 zeigt schematisch das Schaltbild einer mit einer externen Steuereinheit 6 ausgestatteten Brennkraftmaschine 1 nach einer ersten Ausführungsform.

Die Brennkraftmaschine 1 ist mit einer elektronisch geregelten Frischluft- bzw. Frischgemischbeimessung 3, einem elektronisch betätigbaren Getriebe 4 und einer elektronisch betätigbaren Bremsvorrichtung 5 ausgestattet, wobei eine Motorsteuerung 2 vorgesehen ist, mit der die Frischluft- bzw.

Frischgemischbeimessung 3, die Bremsvorrichtung 4 und das Getriebe 5 gesteuert werden.

Um mit einem Kraftfahrzeug einen vorgegebenen Fahrzyklus mit definierten Schaltpunkten auf dem Rollenprüfstand abfahren zu können, ist die Motorsteuerung 2 mit einer externen Steuereinheit 6 verbunden. Mittels der externen Steuereinheit 6 wird unter Zwischenschaltung der eigentlichen Motorsteuerung 2 Einfluß genommen auf die Steuerung der Frischluft- bzw. Frischgemischbeimessung 3, auf die Steuerung des Getriebes 4 d. h. auf den momentanen Getriebegang und auf die Bremsvorrichtung 5. Auf diese Weise kann ein vorgeschriebenes Geschwindigkeitsprofil auf dem Rollenprüfstand nachgebildet bzw. absolviert werden. Die hierzu erforderlichen Daten wurden zuvor in der externen Steuereinheit 6 abgelegt bzw. gespeichert.

Figur 2 zeigt schematisch das Schaltbild einer mit einer externen Steuereinheit 6 ausgestatteten Brennkraftmaschine 1 nach einer zweiten Ausführungsform. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Gegensatz zu der in Figur 1 dargestellten Ausführungsform ist bei der Ausführungsform gemäß Figur 2 zusätzlich ein Roboter 7 zum Betreiben eines Kraftfahrzeuges auf dem Rollenprüfstand vorgesehen.

Der Roboter 7, der über die zur Durchführung des Fahrzyklus erforderlichen Daten, beispielsweise in Form eines Geschwindigkeitsprofils verfügt, übermittelt die Steuersignale bzw. Daten an die externe Steuereinheit 6, die von dieser in die Motorsteuerung 2 des Fahrzeuges eingespeist werden. Die externe Steuereinheit 6 ist dabei die Schnittstelle zwischen Roboter 7 und Fahrzeug bzw. Motorsteuerung 2.

### Bezugszeichen

- 1: Brennkraftmaschine
- 2: Motorsteuerung
- 3: elektronisch geregelte Frischluft- bzw. Frischgemischbeimessung
- 4: elektronisch betätigbares Getriebe
- 5: elektronisch betätigbare Bremsvorrichtung
- 6: externe Steuereinheit
- 7: Roboter zum Betreiben eines Kraftfahrzeuges auf einem Rollenprüfstand

- s: Wegstrecke
- v: Geschwindigkeit

## Patentansprüche

1. Verfahren zum Betreiben eines Kraftfahrzeuges auf einem Rollenprüfstand, wobei das Kraftfahrzeug mit einer Motorsteuerung (2) ausgestattet ist, mit der eine elektronisch geregelte Frischluft- bzw. Frischgemischbeimessung (3) und ein Automatikgetriebe oder ein elektronisch betätigbares Getriebe (4) steuerbar ist,
**dadurch gekennzeichnet, daß**
■ eine externe Steuereinheit (6) an die Motorsteuerung (2) angeschlossen wird und mittels der externen Steuereinheit (6) sowohl auf die Steuerung der Frischluft- bzw. Frischgemischbeimessung (3) als auch auf die Steuerung des Getriebes (4) d. h. auf den momentanen Getriebegang Einfluß genommen wird, um mit dem Kraftfahrzeug vorgebbare Fahrzyklen mit definierten Schaltpunkten auf dem Rollenprüfstand abzufahren.

2. Verfahren zum Betreiben eines Kraftfahrzeuges nach Anspruch 1,
**dadurch gekennzeichnet, daß**
■ das Kraftfahrzeug mit einer elektronisch betätigbaren Bremsvorrichtung (5) ausgestattet wird, die mittels der Motorsteuerung (2) gesteuert wird, und
■ mittels der externen Steuereinheit (6) auf die Steuerung der elektronisch betätigbaren Bremsvorrichtung (5) Einfluß genommen wird.

3. Verfahren nach einem der vorherigen Ansprüche,
**dadurch gekennzeichnet, daß**
■ zur elektronisch geregelten Frischluft- bzw. Frischgemischbeimessung (3) eine elektronisch steuerbare Drosselklappe verwendet wird.

4. Verfahren nach einem der vorherigen Ansprüche,
**dadurch gekennzeichnet, daß**
■ zur elektronisch geregelten Frischluft- bzw. Frischgemischbeimessung (3) elektronisch steuerbare Ladungswechselorgane verwendet werden.

5. Verfahren nach Anspruch 4,
**dadurch gekennzeichnet, daß**
■ als elektronisch steuerbare Ladungswechselorgane zumindest teilweise variable Ventile verwendet werden.

6. Verfahren nach einem der vorherigen Ansprüche,
**dadurch gekennzeichnet, daß**
■ die externe Steuereinheit (6) mit einer Steuereinheit eines herkömmlichen Roboters (7) zum Betreiben eines Kraftfahrzeuges auf einem Rollenprüfstand verbunden wird, und
■ die zum Betreiben des Kraftfahrzeuges erforderlichen Daten bzw. Informationen von der Steuereinheit des Roboters (7) an die externe Steuereinheit (6) weitergeleitet werden.

7. Verfahren nach einem der Ansprüche 1 bis 5,
**dadurch gekennzeichnet, daß**
■ eine externe Steuereinheit (6) verwendet wird, die sowohl von der Motorsteuerung (2) erfaßte Daten aufzeichnen kann als auch die Motorsteuerung (2) beeinflussen bzw. manipulieren kann, und
■ zur Programmierung der externen Steuereinheit (6) ein vorgebbarer Fahrzyklus auf dem Rollenprüfstand absolviert wird und während der Absolvierung dieses Fahrzyklus von der Motorsteuerung (2) erfaßte Daten von der externen Steuereinheit (6) aufgezeichnet werden.

8. Verfahren nach Anspruch 7,
**dadurch gekennzeichnet, daß**
■ zur Programmierung der externen Steuereinheit (6) ein oder mehrere der folgenden Betriebsparameter von der externen Steuereinheit (6) aufgezeichnet werden: Fahrzeuggeschwindigkeit, Drehzahl, Getriebegang, Last, Bremskraft bzw. Bremsleistung, Öltemperatur, Kühlmitteltemperatur, Luftverhältnis, Frischluftbeimessung pro Arbeitspiel.

9. Verfahren nach Anspruch 7 oder 8,
**dadurch gekennzeichnet, daß**
■ die externe Steuereinheit (6) unter Verwendung der aufgezeichneten Daten Einfluß auf die Motorsteuerung (2) nimmt.

10. Verfahren nach einem der Ansprüche 7 bis 9,
**dadurch gekennzeichnet, daß**
■ die aufgezeichneten Daten zur Erzeugung von Kennfeldern verwendet werden bzw. die aufgezeichneten Daten in Form von Kennfeldern gespeichert werden.

11. Verfahren nach einem der Ansprüche 7 bis 10,
**dadurch gekennzeichnet, daß**
■ die aufgezeichneten Daten dazu verwendet werden, ein neuronales Netz zu trainieren.

12. Verfahren nach einem der vorherigen Ansprüche,
**dadurch gekennzeichnet, daß**
■ die externe Steuereinheit (6) mit der Steuerung des Rollenprüfstandes verbunden wird.
